# EUROPÄISCHE PATENTSCHRIFT

(11) **EP 0 633 084 B1**
(45) Veröffentlichungstag und Bekanntmachung des Hinweises auf die Patenterteilung: **04.09.1996**
(21) Anmeldenummer: 94106713.4
(22) Anmeldetag: 29.04.1994
(51) Int. Cl.: B23B 51/00

(54) **Vorrichtung zur Herstellung von Bohrlöchern mit Hinterschneidung**
Drilling device for making holes with undercuttings
Dispositif de perçage à faire des trous à chambrage

(30) Priorität: 10.07.1993 DE 4323102
(43) Veröffentlichungstag der Anmeldung: 11.01.1995
(73) Patentinhaber: fischerwerke Artur Fischer GmbH & Co. KG, D-72178 Waldachtal (DE)
(72) Erfinder: Erath, Herbert, D-72178 Waldachtal-Salzstetten (DE)

(56) Entgegenhaltungen:
- EP-A- 0 442 104
- EP-A- 0 529 238

## Beschreibung

Die Erfindung betrifft eine Vorrichtung zur Herstellung von Bohrlöchern mit Hinterschneidung gemäß der Gattung des Anspruchs 1.

Zur Herstellung von Bohrlöchern mit Hinterschneidung sind Vorrichtungen bekannt, die eine mit einer kalottenförmigen Mulde versehene Lagerbuchse aufweisen, in der ein mit einem Bund versehenes Bohrwerkzeug abgestützt und verschwenkbar gelagert ist. Durch Ausschwenken des Bohrwerkzeuges bei gleichzeitiger Rührbewegung wird von den am Bohrwerkzeug angeordneten Seitenschneiden im Bereich des Bohrlochgrundes eine Hinterschneidung ausgerieben, in die ein Spreizdübel mit aufspreizbarer Spreizhülse formschlüssig einsetzbar ist.

Derartige Bohrlöcher mit Hinterschneidung lassen sich auch in Fassadenplatten oder dergleichen einbringen, jedoch müssen dort die Hinterschneidungen sehr exakt ausgeführt werden, damit beim Einsetzen und Aufspreizen eines Spreizankers kein zu hoher Spreizdruck entsteht. Ein zu hoher Spreizdruck kann nämlich dazu führen, daß ein Teil der Fassadenplatte wegplatzt. Um eine exakte Hinterschneidung herzustellen, sind diese Vorrichtungen derart ausgestaltet, daß ein automatisches, maschinengesteuertes Ausschwenken ermöglicht wird. Ferner werden Bohrwerkzeuge verwendet, die einen mit Diamantsplitter bestückten Bohrkopf aufweisen. Beim Eintauchen des mit der Antriebsachse der Bohrmaschine fluchtend eingespannten Bohrwerkzeuges in die Fassadenplatte kommt die gesamte Stirnseite des kegelstumpfförmig ausgebildeten Bohrkopfes in Eingriff. Dies erfordert einen hohen Anpreßdruck des Bohrwerkzeuges, was aufgrund der geringeren Schnittgeschwindigkeit im Zentrum der Stirnseite des Bohrwerkzeuges zu einem vorzeitigen Stumpfwerden der Diamantsplitter führt. Damit wird die Standzeit des Bohrwerkzeuges erheblich herabgesetzt.

Aus der DE-A1 41 19 350.4 ist eine Vorrichtung zur Herstellung von Bohrlöchern mit Hinterschneidung in Fassadenplatten bekannt, bei der die verwendete Bohrmaschine und damit auch der daran befestigte Bohrer zur Herstellung der Hinterschneidung aus der Mittelachse ausgelenkt und beim Ausreibvorgang entlang einer Kurvenscheibe zwangsweise geführt wird. Das Verschwenken erfolgt von Hand, weshalb die Taumelbewegung des Bohrers beim Ausreibvorgang nur eine geringe Drehzahl aufweist.

Der Erfindung liegt die Aufgabe zugrunde, eine Vorrichtung zur Herstellung von Bohrlöchern mit Hinterschneidung zu schaffen, bei der die zum Ausreiben eines Hinterschnitts erforderliche Taumelbewegung maschinell ausgeführt wird.

Die Lösung dieser Aufgabe erhält man durch die im Anspruch 1 aufgeführten Merkmale. Durch ein an der Lagerung der Bohrspindel angreifendes Auslenkelement kann diese aus ihrer vertikalen Position ausgelenkt werden. Dadurch daß das Auslenkelement auf einem Ring umläuft, wird die Lagerung und somit die darin befindliche Bohrspindel in eine Taumelbewegung versetzt. Die Amplitude der Auslenkung kann auf einfache Weise durch Veränderung der Höhenposition des Rings oder des Auslenkelements eingestellt werden. Die Einstellung der Auslenkung kann während des Bohrvorganges verändert werden, so daß bei Erreichen einer gewünschten Bohrlochtiefe der Ausreibvorgang unmittelbar eingeleitet werden kann. Zur Erstellung des Bohrlochs ist es vorteilhaft, wenn zunächst mit einer geringen Taumelbewegung gebohrt wird und bei Erreichen der Bohrlochtiefe die Taumelbewegung zum Ausreiben der Hinterschneidung vergrößert wird. Beim Ausreiben der Hinterschneidung führt der Bohrer dann keine Vorschubbewegung mehr aus.

Die Taumelbewegung während des Bohrvorganges hat den Vorteil, daß die Bohrung leichter und damit auch materialschonender vorgenommen werden kann. Ohne eine solche Taumelbewegung treten nämlich im Zentrum des mit Diamantsplittern bestückten Bohrkopfs geringe Schnittgeschwindigkeiten auf, die zu einem vorzeitigen Stumpfwerden der Diamantsplitter führen.

Das Auslenkelement läuft vorzugsweise mit einer niedrigeren Drehzahl als die Bohrspindel um. Dabei können Bohrspindel und Auslenkelement von separaten Antriebsmotoren angetrieben werden, jedoch ist es vorteilhafter, einen gemeinsamen Antrieb vorzusehen, der über Riemen- oder Zahnradgetriebe Bohrspindel und Auslenkelement mit unterschiedlichen Drehzahlen antreibt. Ein gemeinsamer Antrieb kann kompakter, mit weniger Gewicht und weniger Kosten realisiert werden. Das geringere Gewicht ist dabei insbesondere für die Erzeugung der Taumelbewegung von Vorteil, da eine geringere Masse dazu beiträgt, daß höhere Taumeldrehzahlen realisiert werden können.

Das Auslenkelement steht vorzugsweise an einem Drehring ab, der die Bohrspindel umschließt. Zur Erzeugung der Taumelbewegung wird nun der Drehring in Rotation versetzt, wobei das an ihm abstehende Auslenkelement die schwenkbar gelagerte Bohrspindel aus der vertikalen Position verschwenkt.

Das Auslenkelement kann eine auf dem Ring aufstehende Rolle oder ein Lagerelement, beispielsweise ein Vierpunktlager sein. Ein solches Vierpunktlager ist wesentlich verschleißfreier zu betreiben als eine Rolle, jedoch ist ein als Rolle ausgebildetes Auslenkelement kostengünstiger herzustellen.

Die Erfindung wird nachfolgend anhand von in der Zeichnung dargestellten Ausführungsbeispielen näher erläutert.

Es zeigen:
Figur 1 eine Vorrichtung zur Herstellung von Bohrlöchern mit Hinterschneidung, bei der als Auslenkelement eine Rolle verwendet wird,
Figur 2 eine Vorrichtung mit einem Vierpunktlager als Auslenkelement, und
Figur 3 die Erstellung eines Bohrlochs mit Hinterschneidung in einer Fassadenplatte.

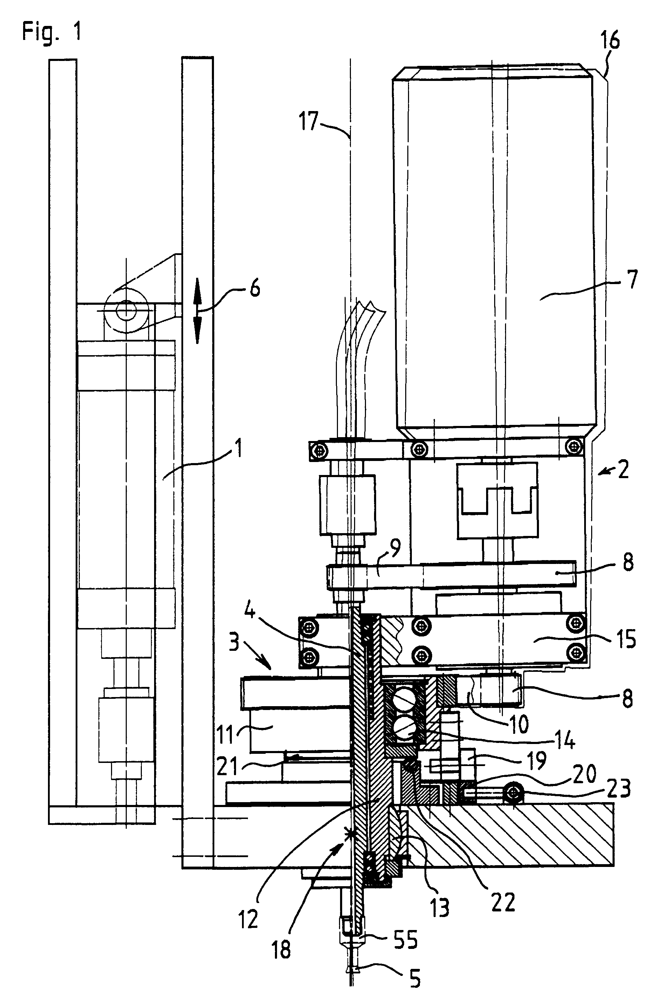

Die in Figur 1 dargestellte Vorrichtung besteht aus einer Vorschubeinheit 1, einer Antriebseinheit 2 sowie einer in einer Schwenkeinrichtung 3 gelagerten Bohrspindel 4.

Die Vorschubeinrichtung 1 bewegt die Antriebseinrichtung 2 zusammen mit der Schwenkeinrichtung 3 und der Bohrspindel 4 in vertikaler Richtung, um den Bohrkopf 5 zur Erstellung eines Bohrlochs absenken und anschließend wieder aus diesem herausziehen zu können. Die vertikale Vorschubbewegung ist durch den Doppelpfeil 6 dargestellt.

Die Antriebseinrichtung 2 besteht aus einem Antriebsmotor 7 und einem Riemengetriebe 8, welches über einen Riemen 9 die Bohrspindel 4 und über einen Riemen 10 einen Drehring 11 antreibt.

Die Bohrspindel 4 liegt in einer Lagerhülse 12 ein, die in einem Schwenklager 13 gelagert ist. An der Lagerhülse 12 ist der Drehring 11 mittels eines Kugellagers 14 gelagert. Die Lagerhülse 12 trägt über eine Halterung 15 die gesamte Antriebseinrichtung 2, die somit ebenso wie die Bohrspindel 4 schwenkbar im Schwenklager 13 gelagert ist. Der Schwenkbereich wird mit unterbrochenen Linien 16 angedeutet. Die Bohrmittelachse 17 verläuft durch den Lagermittelpunkt 18 des Schwenklagers 13, um den die Bohrspindel 4 ausgelenkt bzw. verschwenkt werden kann.

Die Auslenkung der Bohrspindel 4 erfolgt durch ein als Rolle 19 ausgebildetes Auslenkelement, welches an dem Drehring 11 seitlich absteht und von oben gegen einen höhenverstellbaren Ring 20 drückt. Dadurch wird der Drehring 11 einseitig angehoben, so daß die gesamte Anordnung, bestehend aus Bohrspindel 4 und Antriebseinrichtung 2 im Schwenklager 13 geringfügig gekippt wird. Ein an der Lagerbuchse 12 befestigter Lagerflansch 21 liegt auf einem als O-Ring ausgebildeten Gummilager 22 auf, welches somit eine elastische Auslenkung der Lagerbuchse 12 und der darin gelagerten Bohrspindel 4 ermöglicht.

Der Ring 20 ist mittels eines Zylinders 23 höhenverstellbar, um eine größere oder kleinere Auslenkung und damit eine größere oder kleinere Taumelbewegung am Bohrkopf 5 zu erhalten.

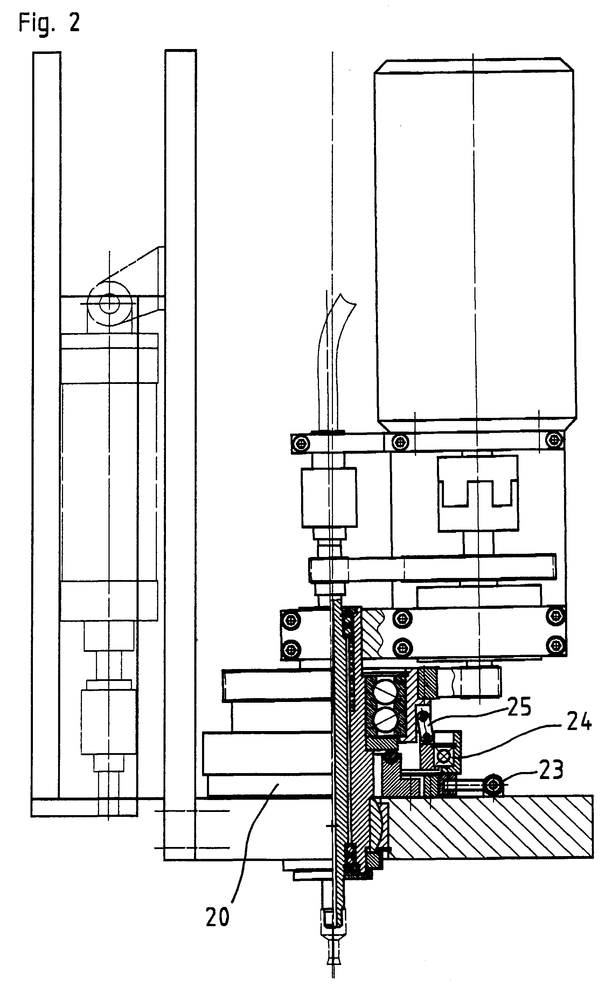

In Figur 2 wird eine Ausführung mit einem Lagerelement 24 als Auslenkelement gezeigt. Das Lagerelement 24 ist als Vierpunktlager ausgeführt und über einen Hebel 25 mit dem Drehring 11 verbunden. Auch hier erfolgt die Höhenverstellung durch einen Zylinder 23, der am höhenverstellbaren Ring 20 angreift.

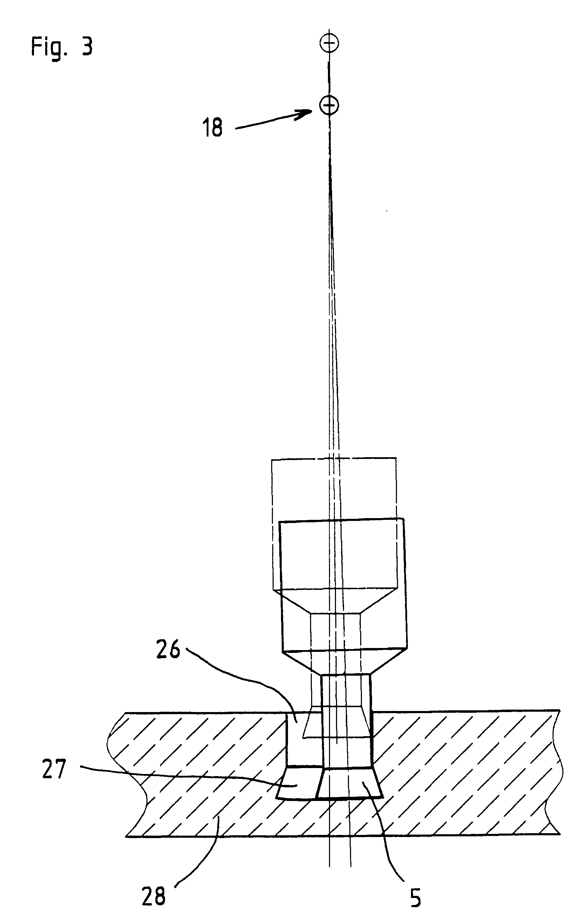

Figur 3 veranschaulicht die Ausreibung eines Bohrlochs 26 mit Hinterschneidung 27 in einer Fassadenplatte 28. Hierzu wird ein Bohrkopf 5 verwendet, der an seiner Stirnseite und an seiner kegelförmigen Mantelfläche mit Diamantsplittern überzogen ist. Durch eine Taumelbewegung um den Lagermittelpunkt 18 wird die Hinterschneidung 27 ausgerieben. Der zylindrische Abschnitt des Bohrlochs 26 wird ebenfalls mit einer Taumelbewegung erstellt, die jedoch eine kleinere Amplitude hat als die Taumelbewegung beim Ausreiben der Hinterschneidung 27. Außerdem wird bei dem Ausreibvorgang der Hinterschneidung 27 der Vorschub für den Bohrkopf 5 abgeschaltet.

Der Bohrkopf 5 ist Teil eines ansich bekannten Bohrwerkzeugs 55 (Figur 1), welches mit der Bohrspindel (4) verbunden ist.

## Patentansprüche

1. Vorrichtung zur Herstellung von Bohrlöchern mit Hinterschneidung, insbesondere in Fassadenplatten aus Keramik, Stein, Beton oder dergleichen mit einer in einem Schwenklager (13) gelagerten Bohrspindel (4) und mit Schwenkeinrichtungen (19, 20, 22, 24) mit denen die Bohrspindel (4) in eine Taumelbewegung um die Bohrmittelachse (17) versetzt wird, **dadurch gekennzeichnet**, daß ein an der Lagerung der Bohrspindel (4) einseitig abstehendes Auslenkelement (19, 24) die Bohrspindel (4) gegen die elastische Rückstellkraft von Gummilagern (22) oder anderer elastischer Elemente aus der Bohrmittelachse (17) auslenkt und daß das Auslenkelement (19, 24) auf einem Ring (20) umläuft.

2. Vorrichtung nach Anspruch 1, **dadurch gekennzeichnet**, daß die Bohrspindel (4) in einer Lagerbuchse (12) gelagert ist, an der ein Lagerflansch (21) absteht, der auf einem als elastisches Element dienenden elastischem O-Ring (22) aufliegt.

3. Vorrichtung nach einem der Ansprüche 1 oder 2, **dadurch** **gekennzeichnet**, daß das Auslenkelement (19, 24) mit einer niedrigeren Drehzahl umläuft als die Bohrspindel (4).

4. Vorrichtung nach Anspruch 3, **dadurch gekennzeichnet**, daß Bohrspindel (4) und Auslenkelement (19, 24) von einem gemeinsamen Antriebsmotor (7) über ein Riemengetriebe (8) angetrieben werden.

5. Vorrichtung nach einem der vorhergehenden Ansprüche, **dadurch gekennzeichnet**, daß an der Lagerung der Bohrspindel (4) ein zur Mittelachse (17) der Bohrspindel (4) koaxial angeordneter Drehring (11) umläuft, an dem das Auslenkelement (19, 24) absteht und den ein Antriebsmotor (7) antreibt.

6. Vorrichtung nach einem der vorhergehenden Ansprüche, **dadurch gekennzeichnet**, daß das Auslenkelement eine Rolle (19) oder ein anderes Lagerelement (24) ist.

7. Vorrichtung nach einem der vorhergehenden Ansprüche, **dadurch gekennzeichnet**, daß das Auslenkelement (19, 24) oder der Ring (20) höhenverstellbar ist.

## Claims

1. A device for producing drilled holes with an undercut, in particular in facing panels of ceramics, stone, concrete or similar materials, having a drill shank (4) mounted in a swivel bearing (13) and having swivelling means (19, 20, 22, 24) with which the drill shank (4) is displaced in a gyratory movement about the centre line of drilling (17), characterized in that a displacement element (19, 24) projecting at one side from the bearing of the drill shank (4) displaces the drill shank (4) against the resilient restoring force of rubber bearings (22) or other resilient elements from the centre line of drilling (17), and the displacement element (19, 24) moves around on a ring (20).

2. A device according to claim 1, characterized in that the drill shank (4) is mounted in a bearing bush (12) from which there projects a bearing flange (21) that lies on a resilient O-ring (22) serving as the resilient element.

3. A device according to one of claims 1 or 2, characterized in that the displacement element (19, 24) rotates at a lower speed than the drill shank (4).

4. A device according to claim 3, characterized in that the drill shank (4) and the displacement element (19, 24) are driven by a common drive motor (7) by way of a belt drive assembly (8).

5. A device according to one of the preceding claims, characterized in that a rotatable ring (11), from which the displacement element (19, 24) projects and which is driven by a drive motor (7), is arranged coaxially with respect to the centre line (17) of the drill shank (4) and rotates on the bearing of the drill shank (4).

6. A device according to one of the preceding claims, characterized in that the displacement element is a roller (19) or other bearing element (24).

7. A device according to one of the preceding claims, characterized in that the displacement element (19, 24) or the ring (20) is vertically adjustable.

## Revendications

1. Dispositif pour le façonnage de trous forés à contre-dépouille, notamment dans des panneaux de façade en céramique, en pierre, en béton ou en des matériaux similaires, comprenant une broche de perçage (4) montée dans un coussinet de pivotement (13), et des systèmes de pivotement (19, 20, 22, 24) par lesquels la broche de perçage (4) est animée d'un mouvement de nutation autour de l'axe médian (17) du perçage, caractérisé par le fait qu'un élément d'excursion (19, 24), faisant saillie d'un côté au-delà de la portée de la broche de perçage (4), dévie la broche de perçage (4) à l'écart de l'axe médian (17) du perçage en s'opposant à la force de rappel élastique de coussinets (22) en caoutchouc, ou d'autres éléments élastiques ; et par le fait que l'élément d'excursion (19, 24) tourne sur une bague (20).

2. Dispositif selon la revendication 1, caractérisé par le fait que la broche de perçage (4) est montée dans une douille de portée (12), au-delà de laquelle fait saillie une aile de portée (21) reposant sur un joint torique élastique (22) remplissant la fonction d'un élément élastique.

3. Dispositif selon l'une des revendications 1 ou 2, caractérisé par le fait que l'élément d'excursion (19, 24) tourne à une plus faible vitesse angulaire que la broche de perçage (4).

4. Dispositif selon la revendication 3, caractérisé par le fait que la broche de perçage (4) et l'élément d'excursion (19, 24) sont menés par un moteur d'entraînement commun (7), par l'intermédiaire d'une transmission (8) par courroies.

5. Dispositif selon l'une des revendications précédentes, caractérisé par le fait qu'un anneau rotatif (11) au-delà duquel l'élément d'excursion (19, 24) fait saillie, qui est mené par un moteur d'entraînement (7) et est agencé coaxialement à l'axe médian (17) de la broche de perçage (4), tourne sur la portée de ladite broche de perçage (4).

6. Dispositif selon l'une des revendications précédentes, caractérisé par le fait que l'élément d'excursion est un galet (19) ou un autre élément de portée (24).

7. Dispositif selon l'une des revendications précédentes, caractérisé par le fait que l'élément d'excursion (19, 24) ou la bague (20) est réglable en hauteur.
